(19) Europäisches Patentamt
European Patent Office
Office européen des brevets

(11) **EP 3 805 777 A1**

(12) **EUROPÄISCHE PATENTANMELDUNG**

(43) Veröffentlichungstag:
**14.04.2021 Patentblatt 2021/15**

(51) Int Cl.:
**G01S 3/808** (2006.01)

(21) Anmeldenummer: **19202377.8**

(22) Anmeldetag: **10.10.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Toposens GmbH**
**80807 München (DE)**

(72) Erfinder:
• **RUDOY, Alexander**
**81373 München (DE)**

• **PERSICHINI, Rinaldo Giovanni**
**80807 München (DE)**
• **TOMASHEVICH, Victor**
**80999 München (DE)**

(74) Vertreter: **Vossius & Partner**
**Patentanwälte Rechtsanwälte mbB**
**Siebertstrasse 3**
**81675 München (DE)**

Bemerkungen:
Geänderte Patentansprüche gemäss Regel 137(2) EPÜ.

(54) **VORRICHTUNGEN UND VERFAHREN ZUR 3D-POSITIONSBESTIMMUNG**

(57)     Empfangseinheit (100) zur Bestimmung der dreidimensionalen Position und/oder der Richtung einer Sendeeinheit. Die Empfangseinheit umfasst: mindestens drei Empfänger (110, 120, 130), die jeweils konfiguriert sind, ein Ultraschallsignal mit einer Wellenlänge $\lambda$ von der Sendeeinheit zu empfangen, wobei ein erster Empfänger in einem Abstand von höchstens einer halben Wellenlänge $\lambda/2$ des Ultraschallsignals zu einem zweiten Empfänger und zu einem dritten Empfänger angeordnet ist, und wobei die mindestens drei Empfänger in einer Ebene angeordnet sind; und einen Prozessor (140), der konfiguriert ist, aus dem an jedem der mindestens drei Empfänger empfangenen Ultraschallsignal die jeweilige Laufzeit zu ermitteln, wobei die jeweilige Laufzeit eine Zeit ist, die das Ultraschallsignal von der Sendeeinheit zu einem definierten Startzeitpunkt bis zum jeweiligen Empfänger benötigt, und wobei der Prozessor ferner konfiguriert ist, aus den ermittelten Laufzeiten sowie der Anordnung der mindestens drei Empfänger die dreidimensionale Position und/oder die Richtung der Sendeeinheit zu bestimmen.

Fig. 1

EP 3 805 777 A1

**Beschreibung**

Die vorliegende Erfindung bezieht sich auf Vorrichtungen und Verfahren zur 3D-Positionsbestimmung und/oder Richtungsbestimmung einer Sendeeinheit.

Aus dem Stand der Technik sind verschiedene Techniken bekannt, die die Position eines Senders bestimmen können.

Die EP 0 215 940 B1 betrifft eine Standortbestimmung von einer Mehrzahl an Zielen, wobei zeitliche Pulse, die an den Zielen reflektiert wurden, durch mindestens drei Sensoren detektiert werden.

Die US 2007/0197229 A1 betrifft ein System zur Bestimmung der relativen Position eines Ziels, Objekts oder Ortes zu einem kabellosen Kommunikationsgerät.

Die US 2011/0111751 A1 betrifft ein System zum Identifizieren, Verfolgen und Orten von Objekten in einem kabellosen Netzwerk.

Die WO 2010/085877 A1 betrifft ein System zur Positionsbestimmung von einem oder mehreren Sendern unter Verwendung eines oder mehrerer Empfängern.

US 2018/0143292 A1 betrifft ein Verfahren zur Bestimmung einer dreidimensionalen Position mittels Ultraschallsignalen.

Die vorstehend genannten Dokumente weisen jedoch Defizite in der Genauigkeit der Positionsbestimmung auf oder basieren auf komplizierten Verfahren.

Beispielsweise werden in einigen der bekannten Verfahren einzelne Laufzeitmessungen nacheinander durchgeführt. Somit erreichen diese Verfahren eine relativ geringe Messfrequenz.

Der vorliegenden Erfindung liegt die Aufgabe zugrunde, Verfahren und Vorrichtungen bereitzustellen, die eine Positionsbestimmung eines Senders im dreidimensionalen Raum mit einer hohen Präzision und einem geringen Aufwand erlaubt.

Diese Aufgabe wird mit den Merkmalen der unabhängigen Patentansprüche gelöst. Die abhängigen Patentansprüche beziehen sich auf weitere Aspekte der Erfindung.

Gemäß einem Aspekt der vorliegenden Erfindung wird eine Empfangseinheit zur Bestimmung der dreidimensionalen Position und/oder der Richtung einer Sendeeinheit bereitgestellt. Die Empfangseinheit umfasst: mindestens drei Empfänger, die jeweils konfiguriert sind, ein Ultraschallsignal mit einer Wellenlänge $\lambda$ von der Sendeeinheit zu empfangen, wobei ein erster Empfänger in einem Abstand von höchstens einer halben Wellenlänge $\lambda/2$ des Ultraschallsignals zu einem zweiten Empfänger und zu einem dritten Empfänger angeordnet ist, wobei optional der erste Empfänger und der zweite Empfänger auf einer ersten Geraden angeordnet sind und der erste Empfänger und der dritte Empfänger auf einer zweiten Geraden angeordnet sind, wobei die erste Gerade und die zweite Gerade bevorzugt einen Winkel von 80° bis 100°, vorzugsweise 85° bis 95°, besonders bevorzugt im Wesentlichen 90° und insbesondere 90°, zueinander aufweisen, und wobei die mindestens drei Empfänger bevorzugt in einer Ebene angeordnet sind; und einen Prozessor, der konfiguriert ist, aus dem an jedem der mindestens drei Empfänger empfangenen Ultraschallsignal die jeweilige Laufzeit zu ermitteln, wobei die jeweilige Laufzeit eine Zeit ist, die das Ultraschallsignal von der Sendeeinheit zu einem definierten Startzeitpunkt bis zum jeweiligen Empfänger benötigt, und wobei der Prozessor ferner konfiguriert ist, aus den ermittelten Laufzeiten sowie der Anordnung der mindestens drei Empfänger die dreidimensionale Position und/oder die Richtung der Sendeeinheit zu bestimmen.

Durch die Bestimmung der verschiedenen Laufzeiten aus einem einzigen Ultraschallsignal kann die Messfrequenz gegenüber Systemen erhöht werden, bei denen jede Laufzeitmessung nacheinander ausgeführt wird. Mit anderen Worten werden gemäß der vorliegenden Erfindung die Laufzeitmessungen "gleichzeitig" durchgeführt, wobei die verschiedenen Laufzeitmessungen lediglich durch ihre spezifischen Laufzeitunterschiede (Differenz zwischen der Zeit, die das Signal zu einem ersten Empfänger und einem zweiten Empfänger benötigt) auseinander liegen.

Wird die vorstehend als optionale beschriebene Anordnung der Empfänger verwendet, ist die Genauigkeit des Verfahrens der vorliegenden Erfindung am höchsten bei einem Winkel von 90° zwischen der ersten und der zweiten Geraden. Diese optionale Anordnung ist allerdings nicht auf den exakten Wert von 90° beschränkt, sondern kann auf Kosten der Genauigkeit auch Abweichungen von dem 90° Winkel (rechter Winkel) zu verwertbaren Ergebnissen führen, wie durch die vorstehend genannten Bereiche um 90° zum Ausdruck gebracht.

Die vorliegende Erfindung ist allerdings nicht auf die vorstehend als optional beschriebene Anordnung der Empfänger beschränkt. Vielmehr können die Empfänger frei in der Ebene angeordnet sein. Bei einer vordefinierten, z.B. rechtwinkligen, Anordnung wird die Berechnungsalgorithmik einfacher und dadurch wird weniger Rechenleistung benötigt. Ferner werden die Ergebnisse genauer, da z.B. die Anzahl der Rundungsfehler, durch die geringere Komplexität der Berechnung, sinkt.

Durch Toleranzen beim Fertigungsprozess kann es passieren, dass die Empfänger versetzt zu der Sollposition platziert werden. Dieser Fehler kann durch eine Kalibrierung (Bestimmung der Ist-Position der Mikrofone) und die Berechnungsalgorithmik für die freie Anordnung korrigiert werden.

Durch die freie Anordnung der Empfänger können verschiedenartige Designs umgesetzt werden, was mehr Flexibilität im Design der Empfangseinheit bedeutet.

Bevorzugt wird der Prozessor als integraler Teil der Empfangseinheit ausgebildet.

Alternativ kann der Prozessor als eigenständige Komponente ausgebildet sein und mit der Empfangseinheit über ein Kabel oder kabellos verbunden sein.

Bevorzugt umfassen die mindestens drei Empfänger jeweils ein Mikrofon.

Bevorzugt weist die Empfangseinheit ferner mindestens eine Verstärkereinheit, die konfiguriert ist, die empfangenen Ultraschallsignale zu verstärken, und/oder mindestens eine Filtereinheit auf, die konfiguriert ist, die empfangenen Ultraschallsignale zu filtern.

Die Verstärkereinheit und/oder die Filtereinheit können die Signalqualität der empfangenen Ultraschallsignale verbessern, indem die empfangenen Ultraschallsignale verstärkt werden bzw. Störsignale herausgefiltert werden. Somit kann das Signal-zu-Rausch Verhältnis der eigentlichen Messsignale zu etwaigen Störsignalen verbessert werden, was zu einer Verbesserung der Genauigkeit der Positionsbestimmung führen kann.

Bevorzugt ist die Empfangseinheit ferner konfiguriert, vor dem Empfangen des Ultraschallsignals ein Synchronisationssignal auszusenden, um das Senden des Ultraschallsignals durch die Sendeeinheit zu initiieren und den Startzeitpunkt für die Bestimmung der jeweiligen Laufzeit zu definieren.

Bevorzugt weist die Empfangseinheit ein Funkmodul auf, das konfiguriert ist, das Synchronisationssignal zu senden.

Bevorzugt ist der Prozessor ferner konfiguriert, beim Aussenden des Synchronisationssignals zur Bestimmung der jeweiligen Laufzeiten jeweils einen Timer für die mindestens drei Empfänger zu starten.

Wird das Signal an einem der Empfänger empfangen kann die Laufzeit durch den jeweiligen Timer bestimmt werden. Mit anderen Worten entspricht die jeweilige Laufzeit der Zeit des entsprechenden Timers zum Zeitpunkt des Empfangs des jeweiligen Signals.

Durch das vorstehend beschriebene Aussenden des Synchronisationssignals kann ein definierter Startzeitpunkt für die jeweilige Laufzeit bestimmt werden.

Gemäß eines weiteren Aspekts der vorliegenden Erfindung kann die Richtung des Senders bestimmt werden. Die Bestimmung der Richtung des Senders erfordert kein Synchronisationssignal, wie vorstehend beschrieben, da der Unterschied der Laufzeiten relativ ist und nicht von einem definierten Startzeitpunkt der Laufzeitmessung abhängt. Dabei werden die Laufzeitunterschiede der empfangenen Signale wie beschrieben bestimmt. Der Unterschied der Laufzeiten gibt eindeutig den Azimut- bzw. Elevationswinkel relativ zu der Ebene der Empfänger an. Somit kann die Richtung des Senders bestimmt werden.

Bevorzugt ist der Prozessor ferner konfiguriert, die jeweilige Laufzeit auf Basis der Phasenverschiebung zwischen den empfangenen Ultraschallsignalen zu bestimmen.

Bevorzugt ist der Prozessor ferner konfiguriert, die dreidimensionale Position der Sendeeinheit auf Basis von sich schneidenden Kreisbahnen zu bestimmen.

Bevorzugt ist der Prozessor ferner konfiguriert, den Radius der Kreisbahnen auf Basis der jeweiligen Laufzeit zu bestimmen.

Bevorzugt liegt das Ultraschallsignal im Bereich von 20 kHz bis 1 GHz, vorzugsweise im Bereich von 20 kHz bis 500 kHz und besonders bevorzugt im Bereich von 30 kHz bis 80 kHz.

Die vorstehend beschriebene Empfangseinheit ist nicht auf den Empfang von Ultraschallsignalen beschränkt. Die Empfangseinheit kann ferner mindestens eine Sendeeinheit umfassen. Somit kann die Empfangseinheit sowohl die vorstehend beschriebene Empfangsfunktionalität als auch eine Sendefunktionalität der vorstehend beschriebenen Sendeeinheit aufweisen. Mit anderen Worten kann die Empfangseinheit zusätzlich die vorstehend beschriebene Funktionalität der Sendeeinheit aufweisen.

Diese Konfiguration kann beispielsweise in einem System mit zwei Empfangseinheiten vorteilhaft sein, wobei mindestens eine der beiden Empfangseinheiten zusätzlich die Funktionen der Sendeeinheit aufweisen kann.

Werden zwei Empfangseinheiten mit zusätzlichen Sendeeinheiten verwendet, kann nach Bedarf eine der Empfangseinheiten zum Empfang der Signale eingerichtet sein und die zweite Empfangseinheit zum Senden der Signale eingerichtet sein. Diese Konfiguration kann nach Bedarf gewechselt werden, sodass in einer ersten Konfiguration die erste Empfangseinheit die Signale sendet und die zweite Empfangseinheit die Signale empfängt und in einer zweiten Konfiguration die erste Empfangseinheit die Signale empfängt und die zweite Empfangseinheit die Signale sendet.

Die Bereitstellung mindestens einer Empfangseinheit mit einer Sendeeinheit erlaubt eine flexible Verwendung der Empfangseinheit(en) und führt zu zusätzlichen Redundanzen in dem entsprechenden System.

Gemäß einem weiteren Aspekt der vorliegenden Erfindung wird ein Stecker zum Verbinden mit einer Buchse, insbesondere im Automobilbereich, bereitgestellt. Der Stecker weist eine Empfangseinheit wie vorstehend beschrieben auf, um den Stecker mit der Buchse zu verbinden.

Gemäß einem weiteren Aspekt der vorliegenden Erfindung wird eine Buchse zum Verbinden mit einem Stecker, insbesondere im Automobilbereich, bereitgestellt. Die Buchse weist eine Empfangseinheit wie vorstehend beschrieben auf, um die Buchse mit dem Stecker zu verbinden.

Wird ein Stecker mit einer Empfangseinheit bereitgestellt, sollte klar sein, dass die entsprechende Buchse eine wie vorstehend beschriebene Sendeeinheit aufweist. Analog dazu, sollte klar sein, dass wenn die Empfangseinheit an der Buchse bereitgestellt wird, der Stecker eine entsprechende Sendeeinheit wie vorstehend beschrieben aufweist.

Gemäß einem weiteren Aspekt der vorliegenden Erfindung wird eine Verwendung der vorstehend beschriebenen Empfangseinheit in einem Stecker oder einer Buchse zum Verbinden des Steckers mit der Buchse, insbesondere im Automobilbereich, bereitgestellt.

Der Stecker und die Buchse können durch die Positionsbestimmung der vorliegenden Erfindung automatisiert verbunden werden. Dazu wird die Position des Steckers oder der Buchse wie vorstehend beschrieben bestimmt und Stecker und Buchse auf Basis der Positionsbestimmung zueinander ausgerichtet.

Die Ausrichtung des Steckers zur Buchse bzw. der Buchse zum Stecker wird vorzugsweise durch eine wiederholte Positionsbestimmung kontrolliert.

Die Genauigkeit der Positionsbestimmung zur Ausrichtung der Buchse und des Steckers kann vorzugsweise in Abhängigkeit der Entfernung zwischen der Buchse und dem Stecker angepasst werden.

Es kann beispielsweise vorteilhaft sein, die Positionsbestimmung der Buchse oder des Steckers bei einer großen Entfernung zwischen dem Stecker und der Buchse grob zu bestimmen und bei einer geringeren Entfernung zwischen dem Stecker und der Buchse, die Positionsbestimmung genauer durchzuführen. Somit kann der benötigte Rechenaufwand verringert werden. Das hier anhand des Steckers bzw. der Buchse Beschriebene gilt gleichermaßen für die vorstehend beschriebenen Empfangs- und Sendeeinheiten und auch für die nachfolgend beschriebenen Systeme und Verfahren der vorliegenden Erfindung.

Gemäß einem weiteren Aspekt der vorliegenden Erfindung wird ein System zur Bestimmung der dreidimensionalen Position einer Sendeeinheit bereitgestellt. Das System umfasst: eine Sendeeinheit mit mindestens einem Sender, der konfiguriert ist, ein Ultraschallsignal mit einer Wellenlänge $\lambda$ zu senden; und eine Empfangseinheit wie vorstehend beschrieben.

Bevorzugt ist die Sendeeinheit konfiguriert, ein Synchronisationssignal von der Empfangseinheit zu empfangen.

Bevorzugt weist die Sendeeinheit ein Funkmodul auf, das konfiguriert ist, das Synchronisationssignal von der Empfangseinheit zu empfangen.

Bevorzugt ist die Sendeeinheit ferner konfiguriert, nach Empfang des Synchronisationssignals das Ultraschallsignal auszusenden.

Gemäß einem weiteren Aspekt der vorliegenden Erfindung wird ein Stecker-Buchse-System zum Verbinden eines Steckers mit einer Buchse, insbesondere im Automobilbereich, bereitgestellt. Das Stecker-Buchse-System weist ein System wie vorstehend beschrieben auf. Die Empfangseinheit ist an dem Stecker oder der Buchse vorgesehen und die Sendeeinheit ist vice versa an der Buchse oder dem Stecker vorgesehen.

Gemäß einem weiteren Aspekt der vorliegenden Erfindung wird eine Verwendung des vorstehend beschriebenen Systems in einem Stecker-Buchse-System zum Verbinden eines Steckers mit einer Buchse, insbesondere im Automobilbereich, bereitgestellt.

Gemäß einem weiteren Aspekt der vorliegenden Erfindung wird ein Verfahren zur Bestimmung der dreidimensionalen Position und/oder der Richtung einer Sendeeinheit bereitgestellt. Das Verfahren umfasst die folgenden Schritte: Empfangen eines Ultraschallsignals mit einer Wellenlänge $\lambda$ von der Sendeeinheit an mindestens drei Empfängern einer Empfangseinheit, wobei ein erster Empfänger in einem Abstand von höchstens einer halben Wellenlänge des Ultraschallsignals $\lambda/2$ zu einem zweiten Empfänger und zu einem dritten Empfänger angeordnet ist, wobei optional der erste Empfänger und der zweite Empfänger auf einer ersten Geraden angeordnet sind und der erste Empfänger und der dritte Empfänger auf einer zweiten Geraden angeordnet sind, wobei die erste Gerade und die zweite Gerade bevorzugt einen Winkel von 80° bis 100°, vorzugsweise 85° bis 95°, besonders bevorzugt im Wesentlichen 90° und insbesondere 90°, zueinander aufweisen, und wobei die mindestens drei Empfänger bevorzugt in einer Ebene angeordnet sind; Ermitteln der jeweiligen Laufzeit aus den an jedem der mindestens drei Empfänger empfangenen Ultraschallsignale, wobei die jeweilige Laufzeit eine Zeit ist, die das Ultraschallsignal von der Sendeeinheit zu einem definierten Startzeitpunkt bis zum jeweiligen Empfänger benötigt; und Bestimmen der dreidimensionalen Position und/oder der Richtung der Sendeeinheit aus den ermittelten Laufzeiten sowie der Anordnung der mindestens drei Empfänger.

Bevorzugt weist das Verfahren ferner einen Schritt zur Verstärkung der empfangenen Ultraschallsignale und/oder einen Schritt zum Filtern der empfangenen Ultraschallsignale auf.

Bevorzugt weist das Verfahren ferner einen Schritt zum Aussenden eines Synchronisationssignals von der Empfangseinheit vor dem Empfangen des Ultraschallsignals auf, um ein Senden des Ultraschallpulses durch die Sendeeinheit zu initiieren und den Startzeitpunkt zu definieren.

Bevorzugt weist das Verfahren nach dem Senden des Synchronisationssignals einen Schritt zum Starten eines Timers für jeden der mindestens drei Empfänger zur Bestimmung der jeweiligen Laufzeiten auf.

Bevorzugt wird die Bestimmung der dreidimensionalen Position der Sendeeinheit auf Basis der Phasenverschiebung zwischen den empfangenen Ultraschallsignalen durchgeführt.

Bevorzugt wird die Bestimmung der dreidimensionalen Position der Sendeeinheit auf Basis von sich schneidenden Kreisbahnen durchgeführt wird.

Bevorzugt wird der Radius der Kreisbahnen auf Basis der jeweiligen Laufzeit bestimmt.

Bevorzugt weist das Verfahren ferner einen Schritt zum Senden eines Ultraschallsignals von einem in der Sendeeinheit vorgesehenen Sender auf.

Bevorzugt weist das Verfahren ferner einen Schritt zum Empfangen des Synchronisationssignals von der Empfangseinheit an der Sendeeinheit auf.

Bevorzugt weist das Verfahren nach dem Schritt zum Empfangen des Synchronisationssignals ferner einen Schritt zum Aussenden des Ultraschallsignals durch die Sendeeinheit auf.

Gemäß einem weiteren Aspekt der vorliegenden Erfindung wird ein Computerprogrammprodukt bereitgestellt, umfassend Befehle, die bei der Ausführung des Programms durch einen Computer diesen veranlassen, das vorstehend beschriebene Verfahren auszuführen.

Die vorliegende Erfindung ist, wie vorstehend beschrieben, insbesondere im Automobilbereich vorteilhaft.

Besonders vorteilhaft ist die vorliegende Erfindung bei der Positionsbestimmung bei Elektrofahrzeugen, bei denen ein Stecker automatisch in eine an einem Fahrzeug angebrachte Buchse eingeführt werden soll, um die Batterie(n) des Fahrzeugs zu laden. Hierzu kann die vorstehend beschriebene Empfangseinheit an dem Stecker oder der Buchse angebracht sein.

Ist die Empfangseinheit an dem Stecker angebracht, ist die Sendeeinheit an der Buchse angebracht und umgekehrt.

Mit anderen Worten richtet sich die vorliegende Erfindung insbesondere auf Sensorsysteme zum automatischen oder manuellen Andocken von Stecker-Buchse-Systemen in Batterieladesystemen oder Tanksystemen.

Weitere Einsatzgebiete der vorliegenden Erfindung sind Sensorsysteme zur Positionsbestimmung bei Robotern, Menschen oder Gütern z.B. in einer Lagerhalle.

Die vorliegende Erfindung kann ferner in der Gestensteuerung und einem Hand-Tracking-System eingesetzt werden, z.B. durch Anbringen der Sendeeinheit am Handgelenk eines Nutzers.

Durch die vorliegende Erfindung wird eine besonders genaue Positionsbestimmung der Sendeeinheit bereitgestellt, die insbesondere in den vorstehend beschriebenen technischen Gebieten erforderlich ist.

Bevorzugte Merkmale der vorliegenden Erfindung umfassen insbesondere:

- mindestens drei Mikrofone im Abstand von einer halben Wellenlänge oder kleiner
- die zu "trackende" Schallquelle (Sendeeinheit) sendet Schallpulse aus (evtl. nach Erhalt des Synchronisationssignals)
- Schallpuls im Ultraschallbereich (ca. 30kHz bis 80kHz)
- Bestimmung der x,y,z-Koordinaten der durch den Synchronisationssignals getriggerten Schallquelle
- Triggerung (wie vorstehend beschrieben) erfolgt über ein Synchronisationssignal z.B. ein Funksignal (oder Lichtblitz oder Zeitsynchronisation[Timer])
- Bestimmung der drei Laufzeiten (drei Mikrofone) des Schallpulses im Zeitbereich (keine FFT) aus dem aufgezeichneten Schallsignal (ADC-Daten)
- Algorithmik: Zwei sich schneidende Kreisbahnen und Vektorrechnung

Somit kann durch die vorliegende Erfindung eine sehr präzise Bestimmung der Laufzeiten und somit eine sehr präzise Bestimmung der 3D-Positions der Sendeeinheit bereitgestellt werden.

Merkmale, die in Bezug auf das erfindungsgemäße Verfahren beschrieben sind, können selbstverständlich auch entsprechenden Eigenschaften der entsprechenden Einrichtungen der erfindungsgemäßen Vorrichtung entsprechen. Entsprechend können Merkmale der beschriebenen Vorrichtung der vorliegenden Erfindung Verfahrensmerkmalen entsprechen.

Nachfolgend wird die vorliegende Erfindung anhand von Ausführungsbeispielen und der Figuren näher erläutert. Es zeigen:

Fig. 1 eine schematische Darstellung der Empfangseinheit gemäß einer Ausführungsform der Erfindung,

Fig. 2 ein Ablaufdiagramm mit Schritten, die die Empfangseinheit gemäß einer Ausführungsform der Erfindung durchführt,

Fig. 3 eine schematische Darstellung der Sendeeinheit gemäß einer Ausführungsform der Erfindung,

Fig. 4 ein Ablaufdiagramm mit Schritten, die die Sendeeinheit gemäß einer Ausführungsform der Erfindung durchführt,

Fig. 5 eine schematische Darstellung der Anordnung der drei Empfänger der Empfangseinheit gemäß einer Ausführungsform der Erfindung,

Fig. 6 eine schematische Darstellung zur Bestimmung der x-Koordinate der Sendeeinheit gemäß der Ausführungsform nach Fig. 5 der Erfindung,

Fig. 7 eine schematische Darstellung zur Bestimmung der y-Koordinate der Sendeeinheit gemäß der Ausführungsform nach Fig. 5 der Erfindung,

Fig. 8 eine schematische Darstellung zur Bestimmung der z-Koordinate der Sendeeinheit gemäß der Ausführungsform nach Fig. 5 der Erfindung,

Fig. 9 eine schematische Darstellung der Anordnung der drei Empfänger der Sendeeinheit gemäß einer weiteren Ausführungsform der Erfindung,

Fig. 10 eine schematische Darstellung der Ausbreitung des Signals von der Sendeeinheit zur Empfangseinheit gemäß einer Ausführungsform der Erfindung,

Fig. 11 ein Energie-Zeit-Diagramm der empfangenen Signale an den drei Empfängern der Empfangseinheit gemäß einer Ausführungsform der Erfindung,

Fig. 12 eine schematische Darstellung zur Bestimmung der x-Koordinate der Sendeeinheit gemäß der Ausführungsform nach Fig. 9 der Erfindung,

Fig. 13 eine schematische Darstellung zur Bestimmung der y-Koordinate der Sendeeinheit gemäß der Ausführungsform nach Fig. 9 der Erfindung, und

Fig. 14 eine schematische Darstellung zur Bestimmung der z-Koordinate der Sendeeinheit gemäß der Ausführungsform nach Fig. 9 der Erfindung.

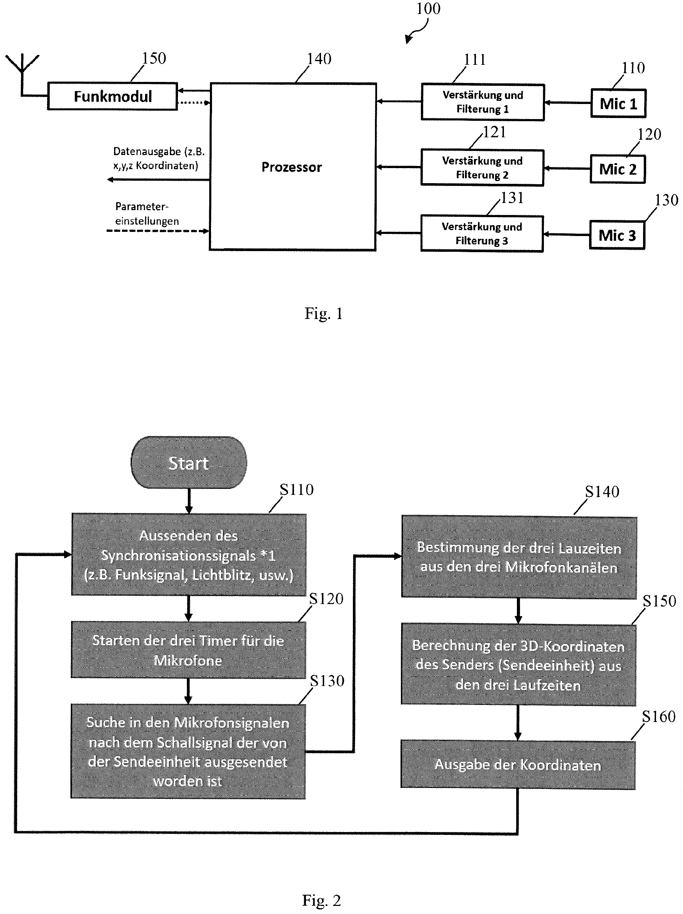

Fig.1 zeigt den schematischen Aufbau einer Empfangseinheit 100 der vorliegenden Erfindung mit einem ersten Empfänger 110 (auch als "Mic 1"bezeichnet), einem zweiten Empfänger 120 (auch als "Mic 2" bezeichnet) und einem dritten Empfänger 130 (auch als "Mic 3" bezeichnet).

Die Empfänger 110, 120, 130 können beispielsweise als Mikrofone bzw. Sensoren zum Empfang von Ultraschallsignalen ausgebildet sein.

Die Empfangseinheit 100 weist ferner jeweils eine Verstärker- und Filtereinheit 111, 121, 131 auf, die mit jeweils einem der Empfänger 110, 12, 130 verbunden sind. Die Verstärker- und Filtereinheiten 111, 121, 131 sind konfiguriert, die an dem jeweiligen Empfänger 110, 120, 130 empfangenen Signale zu empfangen und zu verstärken bzw. zu filtern.

Die Verstärker- und Filtereinheiten 111,121,131 sind insbesondere konfiguriert, das Signal-Rausch Verhältnis zu verbessern, indem das eigentliche Messsignal gegenüber etwaigen Störsignalen verstärkt bzw. herausgefiltert wird.

Obwohl die Verstärker- und Filtereinheiten 111, 121, 131 in Fig. 1 als jeweils eine Einheit gezeigt sind, können die Verstärker- und Filtereinheiten 111, 121, 131 auch als separate Einheiten ausgebildet sein.

Die Empfangseinheit 100 weist ferner einen Prozessor 140 auf, der mit den Verstärker-und Filtereinheiten 111, 121, 131 verbunden ist und der konfiguriert ist, die Signale von den jeweiligen Verstärker-und Filtereinheiten 111, 121, 131 zu empfangen und zu verarbeiten.

Der Prozessor 140 kann weitere Daten, wie z.B. Parametereinstellungen der Empfangseinheit 100, empfangen und verarbeiten.

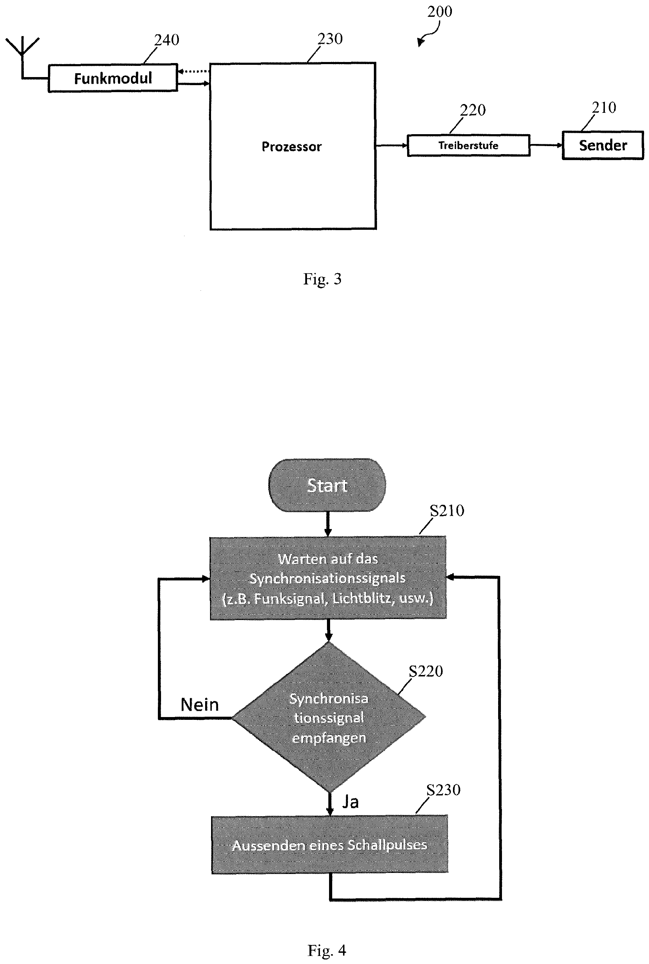

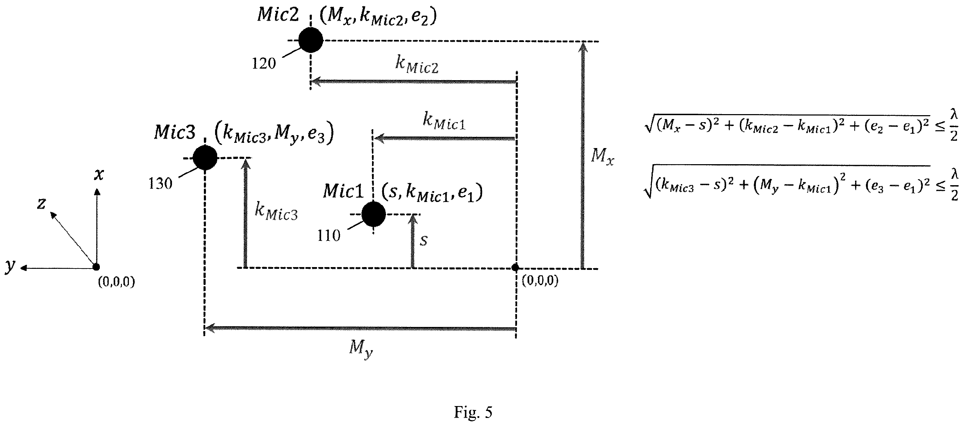

Der Prozessor 140 ist insbesondere konfiguriert, die Positionsbestimmung der Sendeeinheit (nachfolgend anhand der Figuren 3 und 4 näher beschrieben) durchzuführen und vorzugsweise die entsprechenden x,y,z-Koordinaten der Sendeeinheit auszugeben. Die Durchführung der Positionsbestimmung der Sendeeinheit wird nachfolgend anhand der Figuren 5 bis 10 näher beschrieben.

Weitere Funktionen des Prozessors 140 werden durch die nachfolgende Beschreibung der Figuren 2 bis 14 deutlich.

Der Prozessor 140 ist ferner mit einem Funkmodul 150 verbunden. Das Funkmodul 150 ist insbesondere konfiguriert ein Synchronisationssignal auszusenden. Die Aussendung des Synchronisationssignals kann beispielsweise durch den Prozessor 140 initiiert werden, um einen definierten Startzeitpunkt für die später näher beschriebenen Laufzeitmessungen zu erhalten.

Das Funkmodul 150 kann mit dem Prozessor 140 kommunizieren und ein erfolgreiches Aussenden des Synchronisationssignals an den Prozessor 140 melden. Ferner kann das Funkmodul 150 eine Bestätigung von der Sendeeinheit erhalten, wobei die Bestätigung den Erhalt des Synchronisationssignals bestätigt.

Fig. 2 zeigt ein Ablaufdiagramm mit Schritten, die die Empfangseinheit 100 gemäß einer Ausführungsform der Erfindung durchführt.

Im Schritt S110 wird ein Synchronisationssignal durch das Funkmodul 150 der Empfangseinheit 100 ausgesendet. Das Synchronisationssignal kann beispielsweise ein Funksignal, ein Lichtblitz etc. sein.

Im Schritt S120 werden drei Timer gestartet, wobei jeweils ein Timer einem der Empfänger 110, 120, 130 zugeordnet ist. Die Timer werden vorzugsweise im Wesentlichen zeitgleich zur Aussendung des Synchronisationssignals gestartet, um die jeweilige Laufzeit des Signals von der Sendeeinheit zu dem jeweiligen Empfänger 110,120,130 zu bestimmen.

Im Schritt S130 werden in den von den jeweiligen Empfängern 110, 120, 130 empfangenen Signalen nach dem Ultraschallsignal von der Sendeeinheit gesucht. Mit anderen Worten, empfangen die Empfänger 110, 120, 130 ankommende Ultraschallsignale, die durch die nachfolgenden Verstärker-und Filtereinheiten 111, 121, 131 an den Prozessor 140 weitergeleitet werden. Der Prozessor 140 ist konfiguriert, die Signale zu verarbeiten und unter den verschiedenen Signalen, die Signale zu identifizieren die von der Sendeeinheit auf direktem Weg an dem jeweiligen Empfänger 110, 120, 130 empfangen wurden.

Mögliche Störsignale können beispielsweise von reflektierten Signalen stammen, die an Oberflächen reflektierten Signalen des von der Sendeeinheit ausgesendeten Signals entsprechen.

Im Schritt S140 wird unter Verwendung der vorstehend genannten Timer eine jeweilige Laufzeit des Signals von der Sendeeinheit zu dem jeweiligen Empfänger 110, 120, 130 durch den Prozessor 140 bestimmt. Die jeweilige Laufzeit entspricht der Zeit, die das Signal, das von der Sendeeinheit ausgesendet wurde, bis zu dem jeweiligen Empfänger 110, 120, 130 benötigt.

Im Schritt S150 werden die 3D-Koordinaten der Sendeeinheit auf Basis der drei bestimmten Laufzeiten durch den Prozessor 140 ermittelt. Die Ermittlung der 3D-Koordinaten auf Basis der bestimmten Laufzeiten wird nachfolgend näher beschrieben.

Im Schritt S160 werden die bestimmten 3D-Koordinaten durch den Prozessor 140 ausgegeben und das Verfahren kann erneut durchgeführt werden.

Fig. 3 zeigt eine schematische Darstellung der Sendeeinheit 200 gemäß einer Ausführungsform der Erfindung. Die Sendeeinheit 200 weist einen Sender 210, eine Treiberstufe 220, einen Prozessor 230 und ein Funkmodul 240 auf.

Der Sender 210 ist konfiguriert ein Ultraschallsignal auszusenden. Der Sender ist mit einer Treiberstufe 220 verbunden, die den Sender 210 treibt.

Der Prozessor 230 ist mit der Treiberstufe 220 verbunden. Der Prozessor 230 ist ferner mit einem Funkmodul 240 verbunden. Der Prozessor 230 übernimmt im Wesentlichen die Steuerung der Komponenten der Sendeeinheit 200.

Das Funkmodul 240 ist konfiguriert, ein Synchronisationssignal, z.B. ein Funksignal oder Lichtblitz etc., zu empfangen und den Empfang des Synchronisationssignals an den Prozessor 230 zu melden.

Fig. 4 zeigt ein Ablaufdiagramm mit Schritten, die die Sendeeinheit 200 gemäß einer Ausführungsform der Erfindung durchführt.

Im Schritt S210 wartet die Sendeeinheit 200 auf ein Synchronisationssignal der Empfangseinheit 100. Dies könnte als Stand-by Modus bezeichnet werden, wobei der Sender 210 in diesem Modus kein Ultraschallsignal aussendet.

Im Schritt S220 wird bestimmt, ob ein Synchronisationssignal durch das Funkmodul 240 empfangen wurde. Wurde kein Synchronisationssignal an dem Funkmodul 240 empfangen, geht das Verfahren zurück zu Schritt S210 und führt die Schritte S210 und S220 erneut durch.

Die wiederholte Durchführung der Schritte S210 und S220 kann beispielsweise in vorbestimmten Intervallen erfolgen.

Wird ein Synchronisationssignal an dem Funkmodul 240 empfangen, geht das Verfahren in Schritt S230 über.

Im Schritt S230 wird ein Ultraschallsignal durch den Sender 210 ausgesendet. Nach aussenden des Ultraschallsignals geht das Verfahren erneut in Schritt S210 über und die vorstehend beschriebenen Schritte können erneut durchgeführt werden.

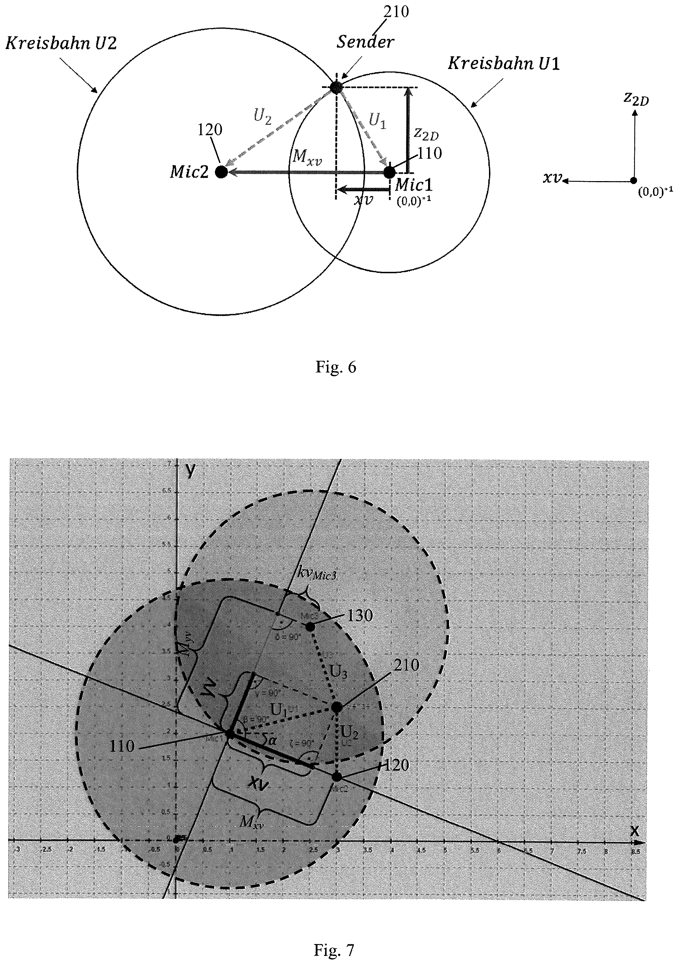

Mit Bezug auf die Figuren 5 und 6 wird die Anordnung der Empfänger 110, 120, 130 der Empfangseinheit 100 gemäß einer Ausführungsform nachfolgend näher beschrieben.

Fig. 5 zeigt eine schematische Darstellung der Anordnung der drei Empfänger 110, 120, 130 der Empfangseinheit 100 gemäß einer Ausführungsform der Erfindung.

In der Darstellung der Fig. 5 befindet sich der Empfänger 110 am Punkt (s, $k_{Miel}$, $e_1$) in Bezug auf einen vorbestimmten Koordinatenursprung (0, 0, 0) eines x,y,z-Koordinatensystems. Der Empfänger 120 befindet sich am Punkt ($M_x$, $k_{Mic2}$, $e_2$). Der Empfänger 130 befindet sich in einem Abstand My ($k_{Mic3}$, $M_y$, $e_3$).

Die Abstände zwischen den Empfängern 110, 120, 130 betragen dabei höchstens λ/2, wobei λ der Wellenlänge des von der Sendeeinheit 200 ausgesendeten Signals entspricht, d.h:

$$\sqrt{(M_x - s)^2 + (k_{Mic2} - k_{Mic1})^2 + (e_2 - e_1)^2} \leq \frac{\lambda}{2},$$

$$\sqrt{(k_{Mic3} - s)^2 + (M_y - k_{Mic1})^2 + (e_3 - e_1)^2} \leq \frac{\lambda}{2}.$$

Dem Fachmann wird klar sein, dass die Lage des vorstehend genannten Koordinatensystems beliebig gewählt werden kann. Für die nachfolgende Beschreibung wird angenommen, dass sich die Empfänger 110, 120, 130 in einer Ebene befinden, d.h. $e_1=e_2=e_3=0$.

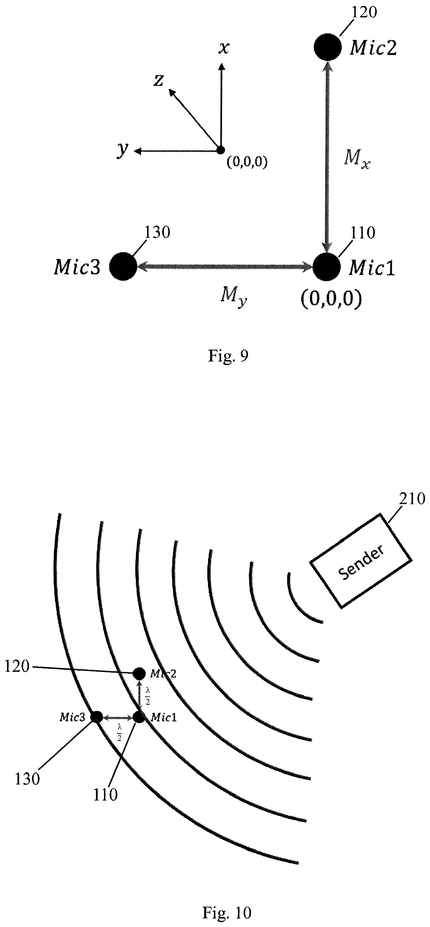

Die Ausbreitung des Signals von der Sendeeinheit 200 ist in Fig. 9 gezeigt und ein entsprechendes Empfangssignal der drei Empfänger 110, 120, 130 ist in Fig. 10 gezeigt. Figuren 9 und 10 werden später anhand eines weiteren Ausführungsbeispiels näher beschrieben, gelten aber in äquivalenter Weise für das hier anhand der Figuren 5 bis 8 beschriebene Ausführungsbeispiel.

Anhand der Figuren 6 bis 8 wird die Berechnung der 3D-Koordinaten der Sendeeinheit 200 nachfolgend näher beschrieben.

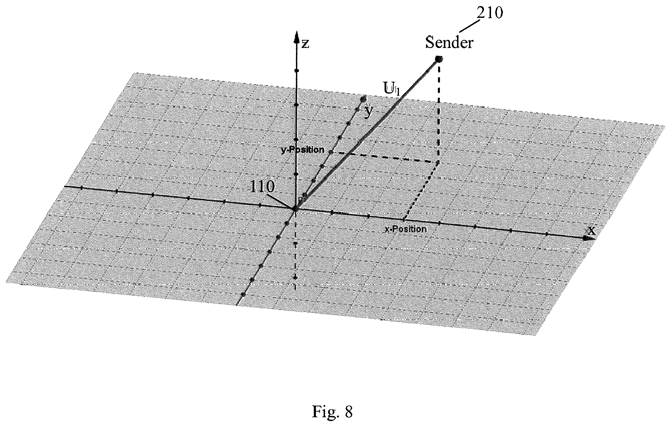

Fig. 6 zeigt eine schematische Darstellung zur Bestimmung der x-Koordinate der Sendeeinheit gemäß einer Ausführungsform der Erfindung. Fig. 7 zeigt eine schematische Darstellung zur Bestimmung der y-Koordinate der Sendeeinheit gemäß einer Ausführungsform der Erfindung. Fig. 8 zeigt eine schematische Darstellung zur Bestimmung der z-Koordinate der Sendeeinheit gemäß einer Ausführungsform der Erfindung.

In Fig. 6 ist der Empfänger 110 (auch als erster Empfänger 110 bezeichnet), der Empfänger 120 (auch als zweiter Empfänger 120 bezeichnet) und der Sender 210 gezeigt. Die zuvor bestimmten Laufzeiten $U_1$ und $U_2$ des Signals von dem Sender 210 zu dem jeweiligen Empfänger 110,120 entsprechen den Radien zweier Kreisbahnen $U_1$ und $U_2$ um den jeweiligen Empfänger 110, 120 wie in Fig. 6 dargestellt.

Die entsprechenden Koordinatengleichungen mit dem Koordinatenursprung an der Stelle des ersten Empfängers 110 für die in Fig. 6 dargestellten Kreisbahnen $U_1$ und $U_2$ lauten:

$$U_1^2 = xv^2 + z_{2D}^2,$$

$$U_2^2 = (xv - M_{xv})^2 + z_{2D}^2.$$

$M_{xv}$ bezeichnet den Abstand zwischen dem ersten Empfänger 110 und dem zweiten Empfänger 120. $U_1$ und $U_2$ bezeichnet den jeweiligen Radius der Kreisbahnen, $xv$ bezeichnet die die xv-Koordinate des Senders 210 und $z_{2D}$ bezeichnet die z-Komponente des Senders 210 in einem xv, $z_{2D}$-Koordinatensystem, wobei die xv-Achse durch den ersten Empfänger 110 und den zweiten Empfänger 120 definiert wird.

Die vorstehenden Koordinatengleichungen können nach $z_{2D}$ umgestellt und gleichgesetzt werden, wodurch die folgende Gleichung erhalten wird:

$$U_1^2 - xv^2 = U_2^2 - (xv - M_{xv})^2.$$

Die Strecke $M_{xv}$ zwischen dem ersten Empfänger 110 und dem zweiten Empfänger 120 berechnet sich wie folgt:

$$M_{xv} = \sqrt{(M_x - s)^2 + (k_{Mic2} - k_{Mic1})^2}.$$

Die gleichgesetzten Koordinatengleichungen können nach xv umgestellt werden und durch Einsetzen von $M_{xv}$ ergibt sich:

$$xv = \frac{U_1^2 - U_2^2 + (M_x - s)^2 + (k_{Mic2} - k_{Mic1})^2}{2\sqrt{(M_x - s)^2 + (k_{Mic2} - k_{Mic1})^2}}.$$

Somit kann die xv-Koordinate des Senders 210 im xv,$Z_{2D}$-Koordinatensystem bestimmt werden.

In Fig. 7 ist der Empfänger 110 (auch als erster Empfänger 110 bezeichnet), der Empfänger 120 (auch als zweiter Empfänger 120 bezeichnet), der Empfänger 130 (auch als dritter Empfänger 130 bezeichnet) und der Sender 210 gezeigt. Fig. 9 zeigt die Bestimmung der x-Koordinate und der y-Koordinate des Senders 210.

Zuerst wird der Rotationswinkel $\alpha$ der Strecke xv zum Ursprungskoordinatensystem bestimmt als:

$$\alpha = arctan\left(\frac{k_{Mic2} - k_{Mic1}}{M_x - s}\right).$$

Der Rotationswinkel $\alpha$ kann zur Bestimmung der Strecke $M_{yv}$ und der Strecke $kv_{Mic3}$ wie folgt verwendet werden:

$$M_{yv} = -(k_{Mic3} - s)\sin(\alpha) + (M_y - k_{Mic1})\cos(\alpha),$$

$$kv_{Mic3} = (k_{Mic3} - s)\cos(\alpha) + \left(M_y - k_{Mic1}\right)\sin(\alpha).$$

Die Koordinatengleichungen für die Kugelflächen der Kugeln mit dem Radius der jeweiligen Laufzeiten $U_1$ und $U_2$ lauten:

$$U_1^2 = xv^2 + yv^2 + z^2$$

und

$$U_3^2 = (xv - kv_{Mic3})^2 + \left(yv - M_{yv}\right)^2 + z^2.$$

Die Koordinatengleichungen können nach z umgestellt und gleichgesetzt werden:

$$U_1^2 - xv^2 - yv^2 = U_3^2 - (xv - kv_{Mic3})^2 - \left(yv - M_{yv}\right)^2.$$

Die gleichgesetzten Koordinatengleichungen können wie folgt nach yv umgestellt werden:

$$yv = \frac{U_1^2 - U_3^2 + M_{yv}^2 - xv^2 + (xv - kv_{Mic3})^2}{2M_{yv}}.$$

Die xv- bzw. yv-Koordinaten können mit Hilfe der Rotation um den Winkel $\alpha$ auf die entsprechenden x- und y-Koordinaten zurückgeführt werden:

$$x = xv\cos(\alpha) - yv\sin(\alpha) + s,$$

$$y = xv\sin(\alpha) - yv\cos(\alpha) + k_{Mic1}.$$

In Fig. 8 ist die Strecke $U_1$ zwischen dem Empfänger 110 und dem Sender 210 gezeigt. Die Strecke $U_1$ kann als Vektor $\overrightarrow{U_1}$ ausgedrückt werden:

$$\overrightarrow{U_1} = \begin{pmatrix} x \\ y \\ z \end{pmatrix}.$$

Der Betrag des Vektors $\overrightarrow{U_1}$ entspricht der Laufzeit des Signals:

$$\left|\overrightarrow{U_1}\right| = \sqrt{x^2 + y^2 + z^2}.$$

Diese Gleichung kann nach z umgestellt werden, wodurch die folgende Gleichung für die z-Koordinate des Senders 210 erhalten wird:

$$z = \sqrt{U_1^2 - x^2 - y^2}.$$

Unter Verwendung der zuvor bestimmten x-Koordinate und y-Koordinate sowie der Laufzeit $U_1$ kann somit die

z-Koordinate des Senders 210 bestimmt werden.

Die vorstehend beschriebenen Berechnungen werden vorzugsweise durch den Prozessor 140 der Empfangseinheit 100 durchgeführt. Die vorstehende Berechnung wurde mit Bezug auf den Sender 210 beschrieben. Es ist dem Fachmann klar, dass sich die vorstehende Berechnung auf die Sendeeinheit 200 bezieht, die den Sender 210 umfasst.

Mit Bezug auf die Figuren 9 bis 11 wird die Anordnung der Empfänger 110, 120, 130 der Empfangseinheit 100 und die Ausbreitung sowie der Empfang des Signals eines weiteren Ausführungsbeispiels nachfolgend näher beschrieben.

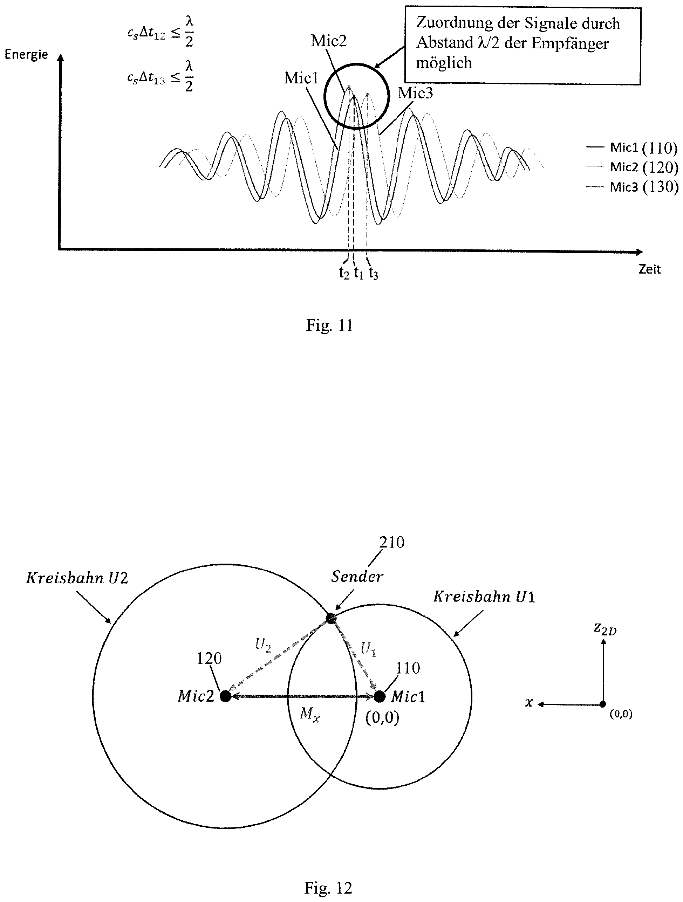

Fig. 9 zeigt eine schematische Darstellung der Anordnung der drei Empfänger 110, 120, 130 der Empfangseinheit 100 gemäß einer Ausführungsform der Erfindung. Fig. 10 zeigt eine schematische Darstellung der Ausbreitung des Signals von der Sendeeinheit 200 zur Empfangseinheit 100 gemäß einer Ausführungsform der Erfindung. Fig. 11 zeigt ein Energie-Zeit-Diagramm der empfangenen Signale an den drei Empfängern 110, 120, 130 der Empfangseinheit 100 gemäß einer Ausführungsform der Erfindung.

In der Darstellung der Fig. 9 befindet sich der Empfänger 110 im Koordinatenursprung (0,0,0) eines x,y,z-Koordinatensystems. Der Empfänger 120 befindet sich in einem Abstand Mx (Mx,0,0) von dem Empfänger 110. Der Empfänger 130 befindet sich in einem Abstand My (0,My,0) von dem Empfänger 110. Die Abstände Mx und My zwischen den Empfängern 110, 120, 130 betragen dabei höchstens $\lambda/2$, wobei $\lambda$ der Wellenlänge des von der Sendeeinheit 200 ausgesendeten Signals entspricht. Die Empfänger 110, 120, 130 sind somit in einer Ebene angeordnet und die Abstände Mx und My betragen höchstens $\lambda/2$.

Ferner sind die Empfänger 110 und 120 auf einer ersten Geraden angeordnet und die Empfänger 110 und 130 auf einer zweiten Geraden angeordnet, wobei die erste Gerade und die zweite Gerade in einem rechten Winkel zueinander stehen. Diese rechtwinklige Anordnung der Empfänger 110, 120, 130 ermöglicht die nachfolgend beschriebene Berechnung der drei Koordinaten über den Azimut- und Elevationswinkel, die immer rechtwinklig zueinander stehen.

Dem Fachmann wird klar sein, dass die Lage des vorstehend genannten Koordinatensystems beliebig gewählt werden kann und hier lediglich beispielhaft zur Erläuterung der nachfolgenden Berechnungen gewählt wurde. Die Ausbreitung des Signals von der Sendeeinheit 200 ist in Fig. 10 gezeigt. Wie in Fig. 10 gezeigt, empfangen die Empfänger 110, 120, 130 der Empfangseinheit 100 das von der Sendeeinheit 200 ausgesendete Signal aufgrund ihrer räumlichen Anordnung zu unterschiedlichen Zeitpunkten.

Ein entsprechendes Empfangssignal der drei Empfänger 110, 120, 130 ist in Fig. 11 gezeigt. Durch die Anordnung der Empfänger 110, 120, 130 in einem Abstand von höchstens der halben Wellenlänge des ausgesendeten Signals, ist eine eindeutige Zuordnung der empfangenen Signale zu dem jeweiligen Empfänger 110, 120, 130 möglich.

Die Laufzeit im Empfänger 110 (Mic1) wird wie folgt bestimmt. Zuerst wird der erste Wendepunkt der Hüllkurve ermittelt. Danach wird das erste lokale Maximum des Signals ermittelt, welches eine vorbestimmte Detektionsschwelle übersteigt. Dies ist die Laufzeit des Signals im Empfänger 110.

Der Detektionsschwellenwert wird vorzugsweise vor der eigentliche Laufzeitmessung als Mittelwert des empfangenen Umgebungs/System-rauschens ermittelt. Die Genauigkeit der Lauzeiten in den Empfängern (Mic3) 130 und 120 (Mic2) bzw. der Laufzeitunterschiede zu dem Empfänger 110 ist für die Bestimmung der Koordinaten ausschlaggebend. Die Signale in unterschiedlichen Empfängern schwingen nicht gleichmäßig auf. Würde man die Laufzeiten in dem Empfänger 120 (Mic2) und Empfänger 130 (Mic3) zu dem ersten lokalen Maximum des Signals im Empfänger 110 zuordnen, könnte es passieren, dass die Phasen der einzelnen Signale in den drei Empfängern sich noch nicht stabilisiert haben. Diese Zuordnung würde dann suboptimale Werte, d.h. ungenauere Werte, der Laufzeiten im Empfänger 130 (Mic3) und Empfänger 120 (Mic2) liefern. Aus diesem Grund ist es vorteilhaft wenn die Phasenunterschiede oder Laufzeitunterschiede im Empfänger 120 (Mic2) und im Empfänger 130 (Mic3) durch die Zuordnung der Signale im Empfänger 120 und Empfänger 130 zu dem lokalen Maximum rechts zu dem ersten lokalen Maximum im Empfänger 110 ermittelt werden, falls das Maximum einen bestimmten Offsetwert zu dem Detektionschwellenwert übersteigt (rein heuristisch ermittelt).

Die "eigentlichen" Laufzeiten im Empfänger 120 (Mic2) und im Empfänger 130 (Mic3) werden vorzugsweise berechnet indem man deren Laufzeitunterschiede zu der eigentlichen Laufzeit im Empfänger 110 addiert.

Mit anderen Worten, die Phasenunterschiede oder Laufzeitunterschiede im Empfänger 120 (Mic2) und im Empfänger 130 (Mic3) werden durch die Zuordnung der Signale im Empfänger 120 und Empfänger 130 zu dem lokalen Maximum rechts zu dem ersten lokalen Maximum im Empfänger 110 ermittelt. Grund dafür ist, dass die Phase der Signale am Anfang, wo das Signal im Empfänger 110 die Detektionsschwclle überstiegen hat, sich möglicherweise noch nicht stabilisiert hat. Nach der Berechnung der Phasen-bzw. Laufzeitunterschiede von Empfänger 110 zu Empfänger 120 und von Empfänger 110 zu Empfänger 130 werden diese zu der ermittelten Laufzeit des Signals im Empfänger 110 zurückaddiert. Somit ergeben sich auch die Laufzeiten der Signale im Empfänger 120 und 130.

Mit anderen Worten, durch die Anordnung der Empfänger 110, 120, 130 in einem Abstand von höchstens der halben Wellenlänge des ausgesendeten Signals, kann eine falsche Zuordnung der Signale vermieden werden. Insbesondere ist zu beachten, dass die Messung der Phasen bzw. Laufzeitunterschiede relativ erfolgt und nichts mit den eigentlichen Hüllkurvenmaxima der einzelnen Kanäle zu tun hat. Die eindeutige Zuordnung der Signale ist bei einem Abstand größer als einer halben Wellenlänge nicht immer möglich, da beispielsweise die Möglichkeit besteht, die Signale aus mindestens zwei unterschiedlichen Richtungen mit genau gleicher Phasenlage zu empfangen. Diese Fehleranfälligkeit kann durch die hier beschriebene Anordnung der Empfänger 110, 120, 130 in einem Abstand von höchstens der halben Wellenlänge des ausgesendeten Signals vermieden werden.

Anhand der Figuren 12 bis 14 wird die Berechnung der 3D-Koordinaten der Sendeeinheit 200 des Ausführungsbeispiels gemäß Figuren 9 bis 11 nachfolgend näher beschrieben.

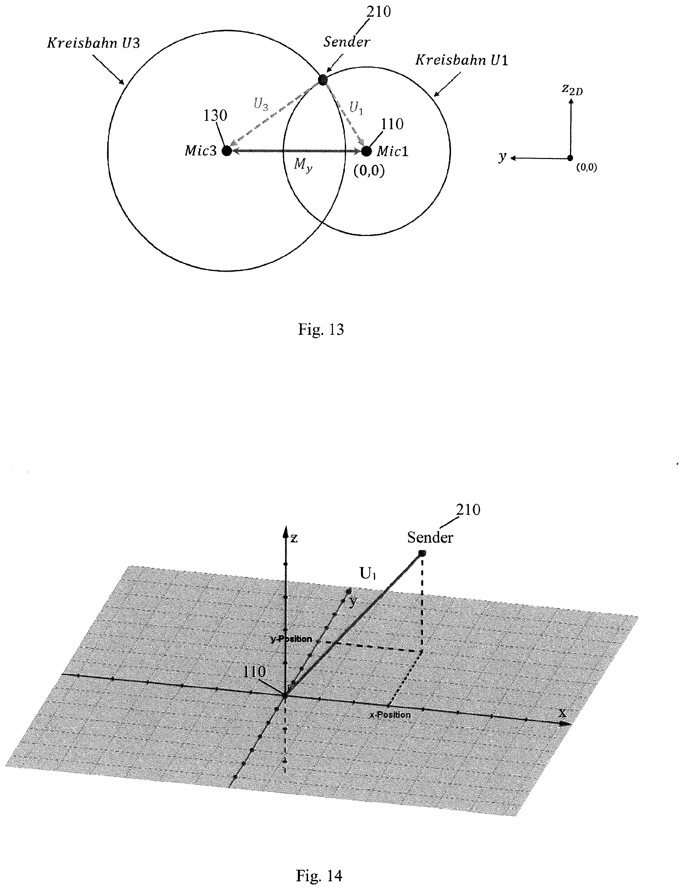

Fig. 12 zeigt eine schematische Darstellung zur Bestimmung der x-Koordinate der Sendeeinheit gemäß einer Ausführungsform der Erfindung. Fig. 13 zeigt eine schematische Darstellung zur Bestimmung der y-Koordinate der Sendeeinheit gemäß einer Ausführungsform der Erfindung. Fig. 14 zeigt eine schematische Darstellung zur Bestimmung der z-Koordinate der Sendeeinheit gemäß einer Ausführungsform der Erfindung.

In Fig. 12 ist der Empfänger 110 (auch als erster Empfänger 110 bezeichnet), der Empfänger 120 (auch als zweiter Empfänger 120 bezeichnet) und der Sender 210 gezeigt. Die zuvor bestimmten Laufzeiten $U_1$ und $U_2$ des Signals von dem Sender 210 zu dem jeweiligen Empfänger 110,120 entsprechen den Radien zweier Kreisbahnen $U_1$ und $U_2$ um den jeweiligen Empfänger 110, 120 wie in Fig. 12 dargestellt.

Die entsprechenden Koordinateng!eichungen für die in Fig. 12 dargestellten Kreisbahnen $U_1$ und $U_2$ lauten:

$$U_1^2 = x^2 + z_{2D}^2,$$

$$U_2^2 = (x - M_x)^2 + z_{2D}^2.$$

$M_x$ bezeichnet den Abstand zwischen dem ersten Empfänger 110 und dem zweiten Empfänger 120. $U_1$ und $U_2$ bezeichnet den jeweiligen Radius der Kreisbahnen. $x$ bezeichnet die x-Koordinate des Senders 210 und $z_{2D}$ bezeichnet die z-Komponente des Senders 210.

Die vorstehenden Koordinatengleichungen können nach $z_{2D}$ umgestellt und gleichgesetzt werden, wodurch die folgende Gleichung erhalten wird:

$$U_1^2 - x^2 = U_2^2 - (x - M_x)^2.$$

Diese Gleichung kann nach $x$ aufgelöst werden, wodurch die folgende Gleichung erhalten wird:

$$x = \frac{U_1^2 - U_2^2 + M_x^2}{2M_x}.$$

Somit kann die x-Koordinate des Senders 210 durch die Bestimmung der zwei Laufzeiten $U_1$ und $U_2$ sowie dem Abstand $M_x$ des ersten Empfängers 110 zum zweiten Empfänger 120 bestimmt werden.

In Fig. 13 ist der Empfänger 110 (auch als erster Empfänger 110 bezeichnet), der Empfänger 130 (auch als dritter Empfänger 130 bezeichnet) und der Sender 210 gezeigt. Fig. 13 zeigt in analoger Weise zu Fig. 12, die Bestimmung der y-Koordinate des Senders 210.

Die zuvor bestimmten Laufzeiten $U_1$ und $U_3$ des Signals von dem Sender 210 zu dem jeweiligen Empfänger 110, 130 entsprechen den Radien zweier Kreisbahnen $U_1$ und $U_3$ um den jeweiligen Empfänger 110, 130, wie in Fig. 13 dargestellt.

Die entsprechenden Koordinatengleichungen für die in Fig. 12 dargestellten Kreisbahnen lauten:

$$U_1^2 = y^2 + z_{2D}^2,$$

$$U_3^2 = (y - M_y)^2 + z_{2D}^2.$$

$M_y$ bezeichnet den Abstand zwischen dem ersten Empfänger 110 und dem dritten Empfänger 130. $U_1$ und $U_3$ bezeichnet den jeweiligen Radius der Kreisbahnen. $y$ bezeichnet die y-Koordinate des Senders 210 und $z_{2D}$ bezeichnet die z-Komponente des Senders 210.

Die vorstehenden Koordinatengleichungen können nach $z_{2D}$ umgestellt und gleichgesetzt werden, wodurch die folgende Gleichung erhalten wird:

$$U_1^2 - y^2 = U_3^2 - (y - M_y)^2.$$

Diese Gleichung kann nach *y* aufgelöst werden, wodurch die folgende Gleichung erhalten wird:

$$y = \frac{U_1^2 - U_3^2 + M_y^2}{2 M_y}.$$

Somit kann die y-Koordinate des Senders 210 durch die Bestimmung der zwei Laufzeiten $U_1$ und $U_3$ sowie dem Abstand $M_y$ des ersten Empfängers 110 zum dritten Empfänger 130 bestimmt werden.

In Fig. 14 ist die Strecke $U_1$ zwischen dem Empfänger 110 und dem Sender 210 gezeigt Die Strecke $U_1$ kann als Vektor $\overrightarrow{U_1}$ ausgedrückt werden:

$$\overrightarrow{U_1} = \begin{pmatrix} x \\ y \\ z \end{pmatrix}.$$

Der Betrag des Vektors $\overrightarrow{U_1}$ entspricht der Laufzeit des Signals:

$$\left|\overrightarrow{U_1}\right| = \sqrt{x^2 + y^2 + z^2}.$$

Diese Gleichung kann nach *z* umgestellt werden, wodurch die folgende Gleichung für die z-Koordinate des Senders 210 erhalten wird:

$$z = \sqrt{U_1^2 - x^2 - y^2}.$$

Unter Verwendung der zuvor bestimmten x-Koordinate und y-Koordinate sowie der Laufzeit $U_1$ kann somit die z-Koordinate des Senders 210 bestimmt werden.

Die vorstehend beschriebenen Berechnungen werden vorzugsweise durch den Prozessor 140 der Empfangseinheit 100 durchgeführt. Die vorstehende Berechnung wurde mit Bezug auf den Sender 210 beschrieben. Es ist dem Fachmann klar, dass sich die vorstehende Berechnung auf die Sendeeinheit 200 bezieht, die den Sender 210 umfasst.

Neben der dreidimensionalen Position des Senders kann bei Bedarf auch die Richtung des Senders bestimmt werden. Die Bestimmung der Richtung des Senders erfordert kein Synchronisationssignal, wie vorstehend beschrieben, da der Unterschied der Laufzeiten relativ ist und nicht von einem definierten Startzeitpunkt der Laufzeitmessung abhängt. Dabei werden die Laufzeitunterschiede der empfangenen Signale, wie beschrieben bestimmt. Der Unterschied der Laufzeiten gibt eindeutig den Azimut bzw. Elevationswinkel relativ zu der Ebene der Empfänger an. Somit kann die Richtung des Senders bestimmt werden.

Während die vorliegende Erfindung hier unter Bezug auf ihre bevorzugten Ausführungsformen beschrieben und dargestellt wurde, ist für Fachleute auf dem Gebiet offensichtlich, dass verschiedene Modifikationen und Änderungen daran vorgenommen werden können, ohne den Schutzbereich der Erfindung zu verlassen. Auf diese Weise ist beabsichtigt, dass die vorliegende Erfindung die Modifikationen und Änderungen dieser Erfindung abdeckt, sofern sie in den Schutzbereich der beigefügten Patentansprüche und ihrer Äquivalente fallen. Ferner sind Merkmale, die in Verbindung mit einer bestimmten Ausführungsform beschrieben wurden, nicht ausschließlich in Verbindung mit anderen Merkmalen dieser Ausführungsform zu verstehen. Es ist vielmehr klar, dass eine Kombination von Merkmalen aus verschiedenen Ausführungsformen ebenfalls möglich ist. Auch ein in Verbindung mit einem anderen Merkmal beschriebenes Merkmal kann in einer möglichen Ausführungsform gemäß der vorliegenden Erfindung ohne das andere Merkmal vorhanden sein.

**Patentansprüche**

1. Empfangseinheit zur Bestimmung der dreidimensionalen Position und/oder der Richtung einer Sendeeinheit, wobei die Empfangseinheit umfasst:

mindestens drei Empfänger, die jeweils konfiguriert sind, ein Ultraschallsignal mit einer Wellenlänge λ von der Sendeeinheit zu empfangen, wobei ein erster Empfänger in einem Abstand von höchstens einer halben Wellenlänge λ/2 des Ultraschallsignals zu einem zweiten Empfänger und zu einem dritten Empfänger angeordnet ist und wobei die mindestens drei Empfänger in einer Ebene angeordnet sind; und

einen Prozessor, der konfiguriert ist, aus dem an jedem der mindestens drei Empfänger empfangenen Ultraschallsignal die jeweilige Laufzeit zu ermitteln, wobei die jeweilige Laufzeit eine Zeit ist, die das Ultraschallsignal von der Sendeeinheit zu einem definierten Startzeitpunkt bis zum jeweiligen Empfänger benötigt, und wobei der Prozessor ferner konfiguriert ist, aus den ermittelten Laufzeiten sowie der Anordnung der mindestens drei Empfänger die dreidimensionale Position und /oder die Richtung der Sendeeinheit zu bestimmen.

2. Empfangseinheit nach Anspruch 1, wobei die Empfangseinheit ferner konfiguriert ist, vor dem Empfangen des Ultraschallsignals ein Synchronisationssignal auszusenden, um das Senden des Ultraschallsignals durch die Sendeeinheit zu initiieren und den Startzeitpunkt zu definieren und wobei der Prozessor vorzugsweise ferner konfiguriert ist, beim Aussenden des Synchronisationssignals zur Bestimmung der jeweiligen Laufzeiten jeweils einen Timer für die mindestens drei Empfänger zu starten.

3. Empfangseinheit nach Anspruch 1 oder 2, wobei der Prozessor ferner konfiguriert ist, die jeweilige Laufzeit auf Basis der Phasenverschiebung zwischen den empfangenen Ultraschallsignalen zu bestimmen und/oder wobei der Prozessor ferner konfiguriert ist, die dreidimensionale Position der Sendeeinheit auf Basis von sich schneidenden Kreisbahnen zu bestimmen und den Radius der Kreisbahnen vorzugsweise auf Basis der jeweiligen Laufzeit zu bestimmen.

4. Empfangseinheit nach einem der Ansprüche 1 bis 3, wobei der erste Empfänger und der zweite Empfänger auf einer ersten Geraden angeordnet sind und der erste Empfänger und der dritte Empfänger auf einer zweiten Geraden angeordnet sind, wobei die erste Gerade und die zweite Gerade einen Winkel von 80° bis 100°, vorzugsweise 85° bis 95°, besonders bevorzugt im Wesentlichen 90° und insbesondere 90° zueinander aufweisen.

5. Stecker zum Verbinden mit einer Buchse, insbesondere im Automobilbereich, wobei der Stecker eine Empfangseinheit nach einem der Ansprüche 1 bis 4 aufweist, um den Stecker mit der Buchse zu verbinden.

6. Buchse zum Verbinden mit einem Stecker, insbesondere im Automobilbereich, wobei die Buchse eine Empfangseinheit nach einem der Ansprüche 1 bis 4 aufweist, um die Buchse mit dem Stecker zu verbinden.

7. Verwendung der Empfangseinheit nach einem der Ansprüche 1 bis 4 in einem Stecker oder einer Buchse zum Verbinden des Steckers mit der Buchse, insbesondere im Automobilbereich.

8. System zur Bestimmung der dreidimensionalen Position und/oder der Richtung einer Sendeeinheit, wobei das System umfasst:

eine Sendeeinheit mit mindestens einem Sender, der konfiguriert ist, ein Ultraschallsignal mit einer Wellenlänge λ zu senden;
eine Empfangseinheit nach einem der Ansprüche 1 bis 4.

9. Stecker-Buchse-System zum Verbinden eines Steckers mit einer Buchse, insbesondere im Automobilbereich, wobei das Stecker-Buchse-System aufweist:
ein System nach Anspruch 8, wobei die Empfangseinheit an dem Stecker oder der Buchse vorgesehen ist und die Sendeeinheit an dem anderen des Steckers oder der Buchse vorgesehen ist.

10. Verwendung des Systems nach Anspruch 8 in einem Stecker-Buchse-System zum Verbinden eines Steckers mit einer Buchse, insbesondere im Automobilbereich.

11. Verfahren zur Bestimmung der dreidimensionalen Position und/oder der Richtung einer Sendecinheit mit den Schritten:

Empfangen eines Ultraschallsignals mit einer Wellenlänge λ von der Sendeeinheit an mindestens drei Empfängern einer Empfangseinheit, wobei ein erster Empfänger in einem Abstand von höchstens einer halben Wellenlänge des Ultraschallsignals λ/2 zu einem zweiten Empfänger und zu einem dritten Empfänger angeordnet ist, und wobei die mindestens drei Empfänger in einer Ebene angeordnet sind;

Ermitteln der jeweiligen Laufzeit aus den an jedem der mindestens drei Empfänger empfangenen Ultraschallsignale, wobei die jeweilige Laufzeit eine Zeit ist, die das Ultraschallsignal von der Sendeeinheit zu einem definierten Startzeitpunkt bis zum jeweiligen Empfänger benötigt; und

Bestimmen der dreidimensionalen Position und/oder der Richtung der Sendeeinheit aus den ermittelten Laufzeiten sowie der Anordnung der mindestens drei Empfänger.

12. Verfahren nach Anspruch 11, ferner aufweisend einen Schritt zum Aussenden eines Synchronisationssignals von der Empfangseinheit vor dem Empfangen des Ultraschallsignals, um ein Senden des Ultraschallpulses durch die Sendeeinheit zu initiieren und den Startzeitpunkt zu definieren und vorzugsweise nach dem Senden des Synchronisationssignals einen Schritt zum Starten eines Timers für jeden der mindestens drei Empfänger zur Bestimmung der jeweiligen Laufzeiten aufweist.

13. Verfahren nach Anspruch 11 oder 12, wobei die Bestimmung der dreidimensionalen Position der Sendeeinheit auf Basis der Phasenverschiebung zwischen den empfangenen Ultraschallsignalen durchgeführt wird und/oder wobei die Bestimmung der dreidimensionalen Position der Sendeeinheit auf Basis von sich schneidenden Kreisbahnen durchgeführt wird und der Radius der Kreisbahnen vorzugsweise auf Basis der jeweiligen Laufzeit bestimmt wird.

14. Verfahren nach einem der Ansprüche 11 bis 13, wobei der erste Empfänger und der zweite Empfänger auf einer ersten Geraden angeordnet sind und der erste Empfänger und der dritte Empfänger auf einer zweiten Geraden angeordnet sind, wobei die erste Gerade und die zweite Gerade einen Winkel von 80° bis 100°, vorzugsweise 85° bis 95°, besonders bevorzugt im Wesentlichen 90° und insbesondere 90° zueinander aufweisen.

15. Computerprogrammprodukt, umfassend Befehle, die bei der Ausführung des Programms durch einen Computer diesen veranlassen, das Verfahren nach einem der Ansprüche 11 bis 14 auszuführen.

**Geänderte Patentansprüche gemäss Regel 137(2) EPÜ.**

1. Empfangseinheit (100) zur Bestimmung der dreidimensionalen Position und/oder der Richtung einer Sendeeinheit (200), wobei die Empfangseinheit (100) umfasst:

   nur drei Empfänger (110, 120, 130), die jeweils konfiguriert sind, ein Ultraschallsignal mit einer Wellenlänge λ von der Sendeeinheit (200) zu empfangen, wobei ein erster Empfänger (110) in einem Abstand von höchstens einer halben Wellenlänge λ/2 des Ultraschallsignals zu einem zweiten Empfänger (120) und zu einem dritten Empfänger (130) angeordnet ist und wobei die drei Empfänger (110, 120, 130) in einer Ebene angeordnet sind; und
   einen Prozessor, der konfiguriert ist, aus dem an jedem der drei Empfänger (110, 120, 130) empfangenen Ultraschallsignal die jeweilige Laufzeit zu ermitteln, wobei die jeweilige Laufzeit eine Zeit ist, die das Ultraschallsignal von der Sendeeinheit (200) zu einem definierten Startzeitpunkt bis zum jeweiligen Empfänger (110, 120, 130) benötigt, und wobei der Prozessor ferner konfiguriert ist, aus den ermittelten Laufzeiten sowie der Anordnung der drei Empfänger (110, 120, 130) die dreidimensionale Position und /oder die Richtung der Sendeeinheit (200) zu bestimmen.

2. Empfangseinheit (100) nach Anspruch 1, wobei die Empfangseinheit (100) ferner konfiguriert ist, vor dem Empfangen des Ultraschallsignals ein Synchronisationssignal auszusenden, um das Senden des Ultraschallsignals durch die Sendeeinheit (200) zu initiieren und den Startzeitpunkt zu definieren und wobei der Prozessor vorzugsweise ferner konfiguriert ist, beim Aussenden des Synchronisationssignals zur Bestimmung der jeweiligen Laufzeiten jeweils einen Timer für die drei Empfänger (110, 120, 130) zu starten.

3. Empfangseinheit (100) nach Anspruch 1 oder 2, wobei der Prozessor ferner konfiguriert ist, die jeweilige Laufzeit auf Basis der Phasenverschiebung zwischen den empfangenen Ultraschallsignalen zu bestimmen und/oder wobei der Prozessor ferner konfiguriert ist, die dreidimensionale Position der Sendeeinheit (200) auf Basis von sich schneidenden Kreisbahnen zu bestimmen und den Radius der Kreisbahnen vorzugsweise auf Basis der jeweiligen Laufzeit zu bestimmen.

4. Empfangseinheit (100) nach einem der Ansprüche 1 bis 3, wobei der erste Empfänger (110) und der zweite Empfänger (120) auf einer ersten Geraden angeordnet sind und der erste Empfänger (110) und der dritte Empfänger (130) auf einer zweiten Geraden angeordnet sind, wobei die erste Gerade und die zweite Gerade einen Winkel von 80° bis 100°, vorzugsweise 85° bis 95°, besonders bevorzugt im Wesentlichen 90° und insbesondere 90° zueinander aufweisen.

5. Stecker zum Verbinden mit einer Buchse, insbesondere im Automobilbereich, wobei der Stecker eine Empfangseinheit (100) nach einem der Ansprüche 1 bis 4 aufweist, um den Stecker mit der Buchse zu verbinden.

6. Buchse zum Verbinden mit einem Stecker, insbesondere im Automobilbereich, wobei die Buchse eine Empfangseinheit (100) nach einem der Ansprüche 1 bis 4 aufweist, um die Buchse mit dem Stecker zu verbinden.

7. Verwendung der Empfangseinheit (100) nach einem der Ansprüche 1 bis 4 in einem Stecker oder einer Buchse zum Verbinden des Steckers mit der Buchse, insbesondere im Automobilbereich.

8. System zur Bestimmung der dreidimensionalen Position und/oder der Richtung einer Sendeeinheit (200), wobei das System umfasst:

    eine Sendeeinheit (200) mit mindestens einem Sender, der konfiguriert ist, ein Ultraschallsignal mit einer Wellenlänge $\lambda$ zu senden;
    eine Empfangseinheit (100) nach einem der Ansprüche 1 bis 4.

9. Stecker-Buchse-System zum Verbinden eines Steckers mit einer Buchse, insbesondere im Automobilbereich, wobei das Stecker-Buchse-System aufweist:
    ein System nach Anspruch 8, wobei die Empfangseinheit (100) an dem Stecker oder der Buchse vorgesehen ist und die Sendeeinheit (200) an dem anderen des Steckers oder der Buchse vorgesehen ist.

10. Verwendung des Systems nach Anspruch 8 in einem Stecker-Buchse-System zum Verbinden eines Steckers mit einer Buchse, insbesondere im Automobilbereich.

11. Verfahren zur Bestimmung der dreidimensionalen Position und/oder der Richtung einer Sendeeinheit (200) mit den Schritten:

    Empfangen eines Ultraschallsignals mit einer Wellenlänge $\lambda$ von der Sendeeinheit (200) an nur drei Empfängern (110, 120, 130) einer Empfangseinheit (100), wobei ein erster Empfänger (110) in einem Abstand von höchstens einer halben Wellenlänge des Ultraschallsignals $\lambda/2$ zu einem zweiten Empfänger (120) und zu einem dritten Empfänger (130) angeordnet ist, und wobei die drei Empfänger (110, 120, 130) in einer Ebene angeordnet sind;
    Ermitteln der jeweiligen Laufzeit aus den an jedem der drei Empfänger (110, 120, 130) empfangenen Ultraschallsignale, wobei die jeweilige Laufzeit eine Zeit ist, die das Ultraschallsignal von der Sendeeinheit (200) zu einem definierten Startzeitpunkt bis zum jeweiligen Empfänger (110, 120, 130) benötigt; und
    Bestimmen der dreidimensionalen Position und/oder der Richtung der Sendeeinheit (200) aus den ermittelten Laufzeiten sowie der Anordnung der drei Empfänger (110, 120, 130).

12. Verfahren nach Anspruch 11, ferner aufweisend einen Schritt zum Aussenden eines Synchronisationssignals von der Empfangseinheit (100) vor dem Empfangen des Ultraschallsignals, um ein Senden des Ultraschallpulses durch die Sendeeinheit (200) zu initiieren und den Startzeitpunkt zu definieren und vorzugsweise nach dem Senden des Synchronisationssignals einen Schritt zum Starten eines Timers für jeden der drei Empfänger (110, 120, 130) zur Bestimmung der jeweiligen Laufzeiten aufweist.

13. Verfahren nach Anspruch 11 oder 12, wobei die Bestimmung der dreidimensionalen Position der Sendeeinheit (200) auf Basis der Phasenverschiebung zwischen den empfangenen Ultraschallsignalen durchgeführt wird und/oder wobei die Bestimmung der dreidimensionalen Position der Sendeeinheit (200) auf Basis von sich schneidenden Kreisbahnen durchgeführt wird und der Radius der Kreisbahnen vorzugsweise auf Basis der jeweiligen Laufzeit bestimmt wird.

14. Verfahren nach einem der Ansprüche 11 bis 13, wobei der erste Empfänger (110) und der zweite Empfänger (120) auf einer ersten Geraden angeordnet sind und der erste Empfänger (110) und der dritte Empfänger (130) auf einer zweiten Geraden angeordnet sind, wobei die erste Gerade und die zweite Gerade einen Winkel von 80° bis 100°, vorzugsweise 85° bis 95°, besonders bevorzugt im Wesentlichen 90° und insbesondere 90° zueinander aufweisen.

15. Computerprogrammprodukt, umfassend Befehle, die bei der Ausführung des Programms durch einen Computer diesen veranlassen, das Verfahren nach einem der Ansprüche 11 bis 14 auszuführen.

100

| 150 | 140 | 111 | 110 |

Funkmodul

Prozessor

Verstärkung und
Filterung 1

Mic 1

Datenausgabe (z.B.
x,y,z Koordinaten)

Verstärkung und
Filterung 2

Mic 2

121

120

Parametereinstellungen

Verstärkung und
Filterung 3

Mic 3

131

130

Fig. 1

Start

**S110**

Aussenden des
Synchronisationssignals *1
(z.B. Funksignal, Lichtblitz, usw.)

**S120**

Starten der drei Timer für die
Mikrofone

**S130**

Suche in den Mikrofonsignalen
nach dem Schallsignal der von
der Sendeeinheit ausgesendet
worden ist

**S140**

Bestimmung der drei Lauzeiten
aus den drei Mikrofonkanälen

**S150**

Berechnung der 3D-Koordinaten
des Senders (Sendeeinheit) aus
den drei Laufzeiten

**S160**

Ausgabe der Koordinaten

Fig. 2

200

240

**Funkmodul**

230

Prozessor

220

Treiberstufe

210

**Sender**

Fig. 3

Start

S210

Warten auf das
Synchronisationssignals
(z.B. Funksignal, Lichtblitz, usw.)

S220

Synchronisa
tionssignal
empfangen

Nein

Ja

S230

Aussenden eines Schallpulses

Fig. 4

$$\sqrt{(M_x - s)^2 + (k_{Mic2} - k_{Mic1})^2 + (e_2 - e_1)^2} \le \frac{\lambda}{2}$$

$$\sqrt{(k_{Mic3} - s)^2 + (M_y - k_{Mic1})^2 + (e_3 - e_1)^2} \le \frac{\lambda}{2}$$

Fig. 5

Fig. 6

Fig. 7

Fig. 8

Fig. 9

Fig. 10

$$c_s \Delta t_{12} \leq \frac{\lambda}{2}$$

$$c_s \Delta t_{13} \leq \frac{\lambda}{2}$$

Energie

Mic2

Mic1

Mic3

Zuordnung der Signale durch
Abstand λ/2 der Empfänger
möglich

—— Mic1 (110)
—— Mic2 (120)
—— Mic3 (130)

$t_2$ $t_1$ $t_3$

Zeit

Fig. 11

*Kreisbahn U2*

210

*Sender*

*Kreisbahn U1*

$U_2$

$U_1$

120

110

*Mic2*

$M_x$

*Mic1*
(0,0)

$z_{2D}$

$x$

(0,0)

Fig. 12

Fig. 13

Fig. 14

**EP 3 805 777 A1**

Europäisches Patentamt
European Patent Office
Office européen des brevets

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2009/207694 A1 (GUIGNE JACQUES Y [CA] ET AL) 20. August 2009 (2009-08-20) <br> * Seite 3, Absatz 44 - Seite 8, Absatz 112 * <br> * Abbildungen 1-16 * <br> * Zusammenfassung * <br> ----- | 1-15 | INV. <br> G01S3/808 |
| A | WO 2018/191425 A1 (PORTLAND STATE UNIV [US]; AVNERA CORP [US]) 18. Oktober 2018 (2018-10-18) <br> * Seite 12, Zeile 18 - Seite 16, Zeile 25 * <br> * Abbildungen 5-9 * <br> * Zusammenfassung * <br> ----- | 1-15 | |
| A | US 2009/190441 A1 (ZHAO JUNHUI [CN] ET AL) 30. Juli 2009 (2009-07-30) <br> * Seite 4, Absatz 50 - Seite 5, Absatz 65 * <br> * Abbildungen 1-4 * <br> * Zusammenfassung * <br> ----- | 1-15 | |
| A,D | US 2018/143292 A1 (PRZYBYLA RICHARD J [US] ET AL) 24. Mai 2018 (2018-05-24) <br> * Seite 1, Absatz 17 - Seite 7, Absatz 84 * <br> * Abbildungen 1-9 * <br> * Zusammenfassung * <br> ----- | 1-15 | RECHERCHIERTE SACHGEBIETE (IPC) <br><br> G01S |
| A | C. WALTER ET AL: "Applications of a Compact Ultrasonic 3D Sensor for Recognition of Shape and Orientation of Objects", PROCEEDINGS IRS2 2015, 1. Januar 2015 (2015-01-01), XP055683706, DOI: 10.5162/sensor2015/A3.2 ISBN: 978-3-9813484-8-4 <br> * das ganze Dokument * <br> ----- <br> -/-- | 1-15 | |

Der vorliegende Recherchenbericht wurde für alle Patentansprüche erstellt

| Recherchenort | Abschlußdatum der Recherche | Prüfer |
|---|---|---|
| München | 7. April 2020 | von Walter, Sven-Uwe |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument

EPO FORM 1503 03.82 (P04C03)

Seite 1 von 2

Europäisches
Patentamt

European
Patent Office

Office européen
des brevets

# EUROPÄISCHER RECHERCHENBERICHT

Nummer der Anmeldung

EP 19 20 2377

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | Gianni Allevato ET AL: "3D imaging method for an air-coupled 40 kHz ultrasound phased-array", , 9. September 2019 (2019-09-09), XP055683716, Gefunden im Internet: URL:http://pub.dega-akustik.de/ICA2019/data/articles/000220.pdf [gefunden am 2020-04-07] * Seite 4779, Absatz 4.2 Transmit and receive characteristics - Seite 4780 * * Abbildung 6 * ----- | 1-15 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 7. April 2020 | von Walter, Sven-Uwe |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes
Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 19 20 2377

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-04-2020

| Im Recherchenbericht angeführtes Patentdokument | Datum der Veröffentlichung | Mitglied(er) der Patentfamilie | Datum der Veröffentlichung |
|---|---|---|---|
| US 2009207694 A1 | 20-08-2009 | KEINE | |
| WO 2018191425 A1 | 18-10-2018 | CA 3059889 A1 | 18-10-2018 |
| | | EP 3610286 A1 | 19-02-2020 |
| | | WO 2018191425 A1 | 18-10-2018 |
| US 2009190441 A1 | 30-07-2009 | CN 101498781 A | 05-08-2009 |
| | | JP 2009186466 A | 20-08-2009 |
| | | JP 2012211910 A | 01-11-2012 |
| | | US 2009190441 A1 | 30-07-2009 |
| US 2018143292 A1 | 24-05-2018 | EP 3545263 A1 | 02-10-2019 |
| | | EP 3545690 A1 | 02-10-2019 |
| | | US 2018143292 A1 | 24-05-2018 |
| | | US 2020064439 A1 | 27-02-2020 |
| | | WO 2018098083 A1 | 31-05-2018 |
| | | WO 2018098085 A1 | 31-05-2018 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0215940 B1
- US 20070197229 A1
- US 20110111751 A1
- WO 2010085877 A1
- US 20180143292 A1